# NEUE EUROPÄISCHE PATENTSCHRIFT

(11) **EP 3 349 962 B2**
(45) Veröffentlichungstag und Bekanntmachung des Hinweises auf die Entscheidung über den Einspruch: **17.07.2024**
(45) Hinweis auf die Patenterteilung: 20.10.2021
(21) Anmeldenummer: 16775107.2
(22) Anmeldetag: 16.09.2016
(51) Int. Cl.: B29C 48/30, B29C 48/09, B29C 48/13, B29C 48/90, B29C 48/25

(54) **VORRICHTUNG ZUM HERSTELLEN VON KUNSTSTOFFROHREN**
DEVICE FOR PRODUCING PLASTIC PIPES
DISPOSITIF DE FABRICATION DE TUYAUX EN PLASTIQUE

(30) Priorität: 18.09.2015 DE 102015115827
(43) Veröffentlichungstag der Anmeldung: 25.07.2018
(73) Patentinhaber: UNICOR GmbH, 97437 Hassfurt (DE)
(72) Erfinder: HOFMANN, Günther, 97437 Hassfurt-Augsfeld (DE)
(74) Vertreter: Louis Pöhlau Lohrentz
(86) Internationale Anmeldenummer: PCT/EP2016/072037
(87) Internationale Veröffentlichungsnummer: WO 2017/046368

(56) Entgegenhaltungen:
- EP-A1- 1 897 671
- WO-A1-91/06419
- DE-A1- 102008 023 178
- FR-A2- 2 240 094
- US-A- 4 504 206
- US-A- 4 681 526

## Beschreibung

Die Erfindung betrifft eine Vorrichtung zum Herstellen von Kunststoffrohren nach dem Oberbegriff des Anspruchs 1.

Eine derartige Vorrichtung zum Herstellen von Kunststoffrohren ist z.B. in der WO 2004/052 624 A1 beschrieben. Die Vorrichtung weist einen Extruder mit Spritzkopf und einen Korrugator auf, in den über den Spritzkopf ein Kunststoffschmelzeschlauch zum Ausformen des Kunststoffrohres eingeleitet wird. Der Korrugator weist eine Formstrecke auf, in der Formbacken paarweise in Produktionsrichtung geführt werden. In einem Einlaufabschnitt des Korrugators werden die Formbacken zu Formbackenpaaren zum Anfang der Formstrecke zusammengeführt. In einem Auslaufabschnitt des Korrugators werden die Formbackenpaare vom Ende der Formstrecke auseinander geführt. In einer zwischen dem Einlaufabschnitt und dem Auslaufabschnitt angeordneten Zwischenabschnitt des Korrugators ist die Formstrecke zur Führung der Formbackenpaare ausgebildet und eine Rückführung ausgebildet, in der die Formbacken vom Ende der Formstrecke zum Anfang der Formstrecke rückgeführt werden.

Eine derartige Vorrichtung zur Herstellung von gewellten Kunststoffrohren ist auch aus der DE 10 2008 021 237 A1 bekannt.

Aus der US 4 633 699 ist eine Anlage zur Herstellung eines langen Kabels bekannt, wobei gebogene schienenartige Abschnitte der Außen- und Innenwand der Formstrecke in Nuten an der Ober- und Unterseite der Formbacken eingreifen und die Formbacken dadurch geführt werden.

Aus der US 4 504 206 A ist ein Korrugator mit zweiteiligen Formbacken bekannt. Die Formbacken weisen jeweils vier Führungsrollen auf, welche als unabhängig voneinander drehbare Rollen ausgebildet sind.

Aus der EP 1 897 671 A1 ist ein Korrugator mit einer Führungs- und/oder Temperierkörpereinrichtung für Formbacken bekannt. Die Umlenkbereiche sind als sogenannte Führungsblöcke ausgebildet.

Bekannt sind bereits Vorrichtungen zum Herstellen von Kunststoffrohren mit Formbacken, die drehbar gelagerte Rollen aufweisen, die zur Führung der Formbacken in eine gemeinsame Nut eingreifen. Durch die Größe der Lager und der Rollen ist eine solche Führung bei Formbacken für Kunststoffrohren mit kleinem Durchmesser bis 75 mm nicht ohne weiteres möglich.

Aufgabe der vorliegenden Erfindung ist es, eine hinsichtlich der Führung der Formbacken verbesserte Vorrichtung zum Herstellen von Kunststoffrohren anzugeben.

Erfindungsgemäß wird diese Aufgabe mit dem Gegenstand des Anspruchs 1 gelöst. Bei der Lösung handelt es sich um eine Vorrichtung zum Herstellen von Kunststoffrohren, mit einem Extruder mit Spritzkopf und einem Korrugator, in den über den Spritzkopf ein Kunststoffschmelzeschlauch zum Ausformen des Kunststoffrohres eingeleitet wird. Es ist vorgesehen, dass der Korrugator eine Formstrecke aufweist, in der Formbacken paarweise in Produktionsrichtung geführt werden.

Ferner ist vorgesehen, dass in einem Einlaufabschnitt des Korrugators die Formbacken zu Formbackenpaaren zum Anfang der Formstrecke zusammengeführt werden.

Die Vorrichtung sieht vor, dass in einem Auslaufabschnitt des Korrugators die Formbackenpaare vom Ende der Formstrecke auseinander geführt werden. Ferner sieht eine solche Vorrichtung vor, dass in einem zwischen dem Einlaufabschnitt und dem Auslaufabschnitt angeordneten Zwischenabschnitt des Korrugators die Formstrecke zur Führung der Formbackenpaare ausgebildet ist und eine Rückführung ausgebildet ist, in der die Formbacken vom Ende der Formstrecke zum Anfang der Formstrecke rückgeführt werden. Die Lösung sieht eine ortsfeste Führungseinrichtung zur Führung der Formbacken vor.

Wesentlich ist hierbei, dass jeder Formbacken nur zwei Führungsstifte aufweist, und zwar einen ersten Führungsstift und einen zweiten Führungsstift und die Formbacken in der Führungseinrichtung geführt sind, indem der erste Führungsstift mit seinem freien Ende in eine erste Führungsnut der Führungseinrichtung eingreift und der zweite Führungsstift mit seinem freien Ende in eine zweite Führungsnut der Führungseinrichtung eingreift.

Die Führungseinrichtung mit den Führungsstiften, die mit ihrem freien Ende vorzugsweise unmittelbar in die Führungsnuten eingreifen, ist konstruktiv besonders einfach und kompakt ausführbar.

Erfindungsgemäß ist vorgesehen, dass die Führungseinrichtung zur Führung der Formbacken eine zusammengesetzte Einrichtung ist, zusammengesetzt aus einer Führung durch die Führungs- und Temperierkörpereinrichtung in dem Zwischenabschnitt des Korrugators ausgebildet und aus einer Führung in den Umlenkbereichen im Einlaufabschnitt und im Auslaufabschnitt. Wobei zur Ausbildung der Führung im Umlenkbereich des Einlaufabschnitts und des Auslaufabschnitts untere und obere Führungsnuten vorgesehen sind, in die die Führungsstifte der Formbacken eingreifen, wobei die Formbacken als den ersten Führungsstift und den zweiten Führungsstift jeweils einen oberen und einen unteren Führungsstift aufweisen, die an entgegengesetzten Endabschnitten des Formbackens jeweils auf der Oberseite bzw. der Unterseite des Formbackens angeordnet sind, und die oberen und die unteren Führungsnuten unterschiedliche Geometrien aufweisen, wobei die durch die Führungsnuten definierten Führungsbahnen so ausgebildet sind, dass die Formbacken in den Kurvenabschnitten der Führungsbahnen eine Schwenkbewegung ausführen, wie dies in den Umlenkbereichen der Ein- und Auslaufabschnitte erforderlich ist.

Was die Ausgestaltung des Führungsstifts betrifft, kann vorgesehen sein, dass der erste Führungsstift und/oder der zweite Führungsstift jeweils als einstückiger Führungsstift oder als mehrteiliger, vorzugsweise aus mehreren stiftförmigen Teilen zusammengesetzter Führungsstift ausgebildet ist.

Eine besonders gute Führung ergibt sich erfindungsgemäß mit der Ausführung, die vorsieht, dass der erste Führungsstift und der zweite Führungsstift jeweils so ausgebildet ist, dass das in die Führungsnut eingreifende freie Ende des Führungsstifts als ein bewegungsfestes Teil des Führungsstiftes ausgebildet ist.

Konstruktiv besonders einfache Lösungen ergeben sich, wenn vorgesehen ist, dass der erste Führungsstift und/oder der zweite Führungsstift jeweils so ausgebildet ist, dass das in die Führungsnut eingreifende Ende des Führungsstifts als einstückiges Teil des Führungsstiftes ausgebildet ist.

Besonders vorteilhafte Ausführungen können vorsehen, dass der erste Führungsstift und/oder der zweite Führungsstift jeweils so ausgebildet ist, dass der Führungsstift zumindest im Bereich seines freien Endes gehärtet ausgebildet ist.

Es kann mit besonderem Vorteil vorgesehen sein, dass der erste Führungsstift und/oder der zweite Führungsstift jeweils so ausgebildet ist, dass der Führungsstift zumindest im Bereich des freien Endes weicher ausgebildet ist als die Führungsbahn der Führungsnut.

Eine besonders einfache Fertigung und gutes Funktionieren im Betrieb kann mit der erfindungsgemäßen Ausführung erhalten werden, die vorsieht, dass der erste Führungsstift und der zweite Führungsstift jeweils so ausgebildet ist, dass der Führungsstift in den Formbacken eingepresst oder eingeschweißt oder verschraubt ist.

Eine besonders praktikable Führung wird erfindungsgemäß erhalten, bei der vorgesehen ist, dass die zwei Führungsstifte an jedem Formbacken zueinander mit einem Abstand angeordnet sind, der entlang der Erstreckung des Formbackens in Produktionsrichtung ausgebildet ist. Erfindungsgemäß ist vorgesehen, dass die zwei Führungsstifte an unterschiedlichen Seiten des Formbackens, an gegenüberliegenden Seiten des Formbackens angeordnet sind.

Bei erfindungsgemäßen Ausführungen ist vorgesehen, dass die Führungseinrichtung eine Führungs- und/oder Temperierkörpereinrichtung aufweist. Erfindungsgemäß ist vorgesehen, dass in der Führungs- und/oder Temperierflächeneinrichtung der Führungs- und/oder Temperierkörpereinrichtung Erhebungen und/oder Vertiefungen aufweisende Führungsausnehmungen und/oder ebene Führungsflächen ausgebildet sind, die mit korrespondierenden Führungsausnehmungen und/oder Führungsflächen der passierenden Formbacken zusammenwirken.

Es kann auch vorgesehen sein, dass die Erhebungen und/oder Vertiefungen aufweisenden Führungsausformungen der Führungs- und/oder Temperierkörpereinrichtungen vorzugsweise als Führungsstifte und/oder Führungsnasen ausgebildet sind und/oder als Führungsvertiefungen, vorzugsweise Führungsnuten ausgebildet sind; und
dass die Erhebungen und/oder Vertiefungen aufweisenden Führungsausformungen der Formbacken als Führungsausformungen zum Zusammenwirken mit der Führungs- und/oder Temperierkörpereinrichtung ausgebildet sind.

Konstruktiv besonders einfach und besonders kompakt können Ausführungen gestaltet werden, die vorsehen, dass die Führungs- und/oder Temperierkörpereinrichtung aus mehreren in Führungsrichtung axial hintereinander auf Stoß angeordneten Temperierkörpern ausgebildet ist und/oder aus mehreren quer zur Führungsrichtung nebeneinander angeordneten Temperierkörpern gebildet ist.

Besondere Kompaktheit und gute Führungseigenschaften werden mit Ausführungen erhalten, die vorsehen, dass mindestens eines der Führungsvertiefungen und/oder der Führungsvorsprünge im Bereich zwischen zwei in Querrichtung benachbarten Führungs- und/oder Temperierkörpern ausgebildet ist, d.h. zusammengesetzt durch Abschnitte von zwei benachbarten Führungs- und/oder Temperierkörpern ausgebildet.

Alternativ können die Führungsvertiefungen und/oder Führungsvorsprünge auch einstückig jeweils mit nur einem der Führungs- und/oder Temperierkörper ausgebildet sein.

Die Erfindung wird nun anhand von Ausführungsbeispielen näher erläutert. Es zeigen
- Fig. 1: ein Ausführungsbeispiel einer erfindungsgemäßen Vorrichtung zum Herstellen von Kunststoffrohren in einer schematischen Draufsicht;
- Fig. 2: einen Korrugator der Vorrichtung in Fig. 1 in einer perspektivischen Darstellung;
- Fig. 3: ein Formbackenpaar der Vorrichtung in Fig. 1 in perspektivischer Darstellung;
- Fig. 4: einen Ausschnitt eines Einlaufabschnitts der Vorrichtung in Fig. 1 in perspektivischer Darstellung;
- Fig. 5: den Zwischenabschnitt der Vorrichtung in Fig. 1 mit den Formstrecken und den Rückführungen in einer Schnittdarstellung;
- Fig. 6: ein Kupplungsmodul mit Temperiermittelkanal-Umleitung in einer perspektivischen Schnittdarstellung.

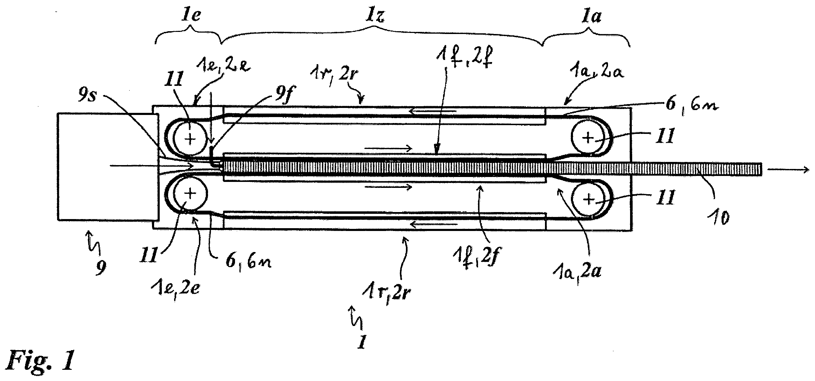

Fig. 1 zeigt eine Vorrichtung zum Herstellen von Kunststoffrohren 10, mit einem Extruder 9 mit Spritzkopf 9s und einem Korrugator 1. In den Korrugator wird über den Spritzkopf 9s ein Kunststoffschmelzeschlauch zum Ausformen eines Kunststoffrohres 10 eingeleitet.

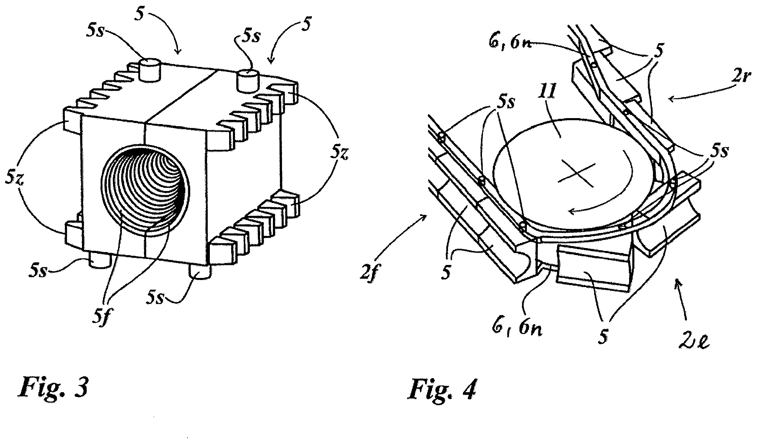

Der Korrugator 1 weist eine Formstrecke 1f auf, in der Formbacken 5 paarweise (siehe Fig. 3) in Produktionsrichtung geführt werden.

In einem Einlaufabschnitt 1e des Korrugators 1 werden die Formbacken 5 in einem Einlaufmodul 2e zu Formbackenpaaren zum Anfang der Formstrecke 1f zusammengeführt.

In einem Auslaufabschnitt 1a des Korrugators 1 werden die Formbackenpaare in einem Auslaufmodul 2a vom Ende der Formstrecke 1f auseinander geführt.

Die Formstrecke 1f ist in einem zwischen dem Einlaufabschnitt 1e und dem Auslaufabschnitt 1a angeordneten Zwischenabschnitt 1z des Korrugators 5 als Formstreckenmodul 2f ausgebildet. Ferner ist in dem Zwischenabschnitt 1z beidseitig der Formstrecke 1f jeweils eine Rückführung 1r ausgebildet, nämlich eine Rückführung 1r für die linken Formbacken und eine Rückführung 1r für die rechten Formbacken. In den Rückführungen 1r werden die Formbacken 5 vom Ende der Formstrecke 1f zum Anfang der Formstrecke 1f rückgeführt. Die Rückführungen 1r, 1r sind als zwei separate Rückführungsmodule 2r, 2r ausgebildet. Sie sind parallel zueinander angeordnet. Das Formstreckenmodul 2f ist dazwischen angeordnet.

Die hintereinander angeordneten Formbackenpaare liegen in der Formstrecke stirnseitig aufeinander auf Stoß. Ein Formbackenpaar umfasst zwei spiegelbildlich ausgebildete Formbacken 5, deren Formflächen 5f (siehe Fig. 3) die Negativform für das in der Vorrichtung ausgebildete Kunststoffrohr 10 bilden. Zur Herstellung von Kunststoffwellrohren sind die Formflächen 5f wellenförmig. Die Formflächen 5f der in der Formstrecke 1f auf Stoß angeordneten Formbackenpaare bilden einen durchgehenden Formkanal.

Der in Fig. 1 nur schematisch dargestellte Extruder 9 weist einen düsenförmigen Spritzkopf 9s auf, dessen Austrittsöffnung am Eingang der Formstrecke angeordnet ist. Über den Spritzkopf 9s wird der Kunststoffschmelzeschlauch in die Formstrecke des Korrugators eingespritzt. Über entsprechende Drucksteuerung werden die an der Innenseite und der an der Außenseite des Kunststoffschmelzeschlauchs in der Formstrecke 1f einwirkenden Drücke gesteuert. Abhängig von der Ausbildung der Düseneinrichtung des Spritzkopfs 9s können ein- und mehrwandige Kunststoffrohre hergestellt werden.

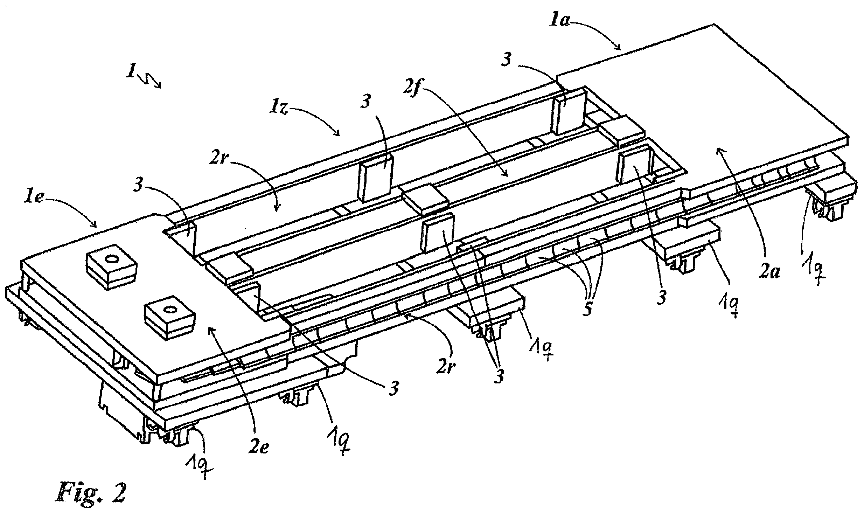

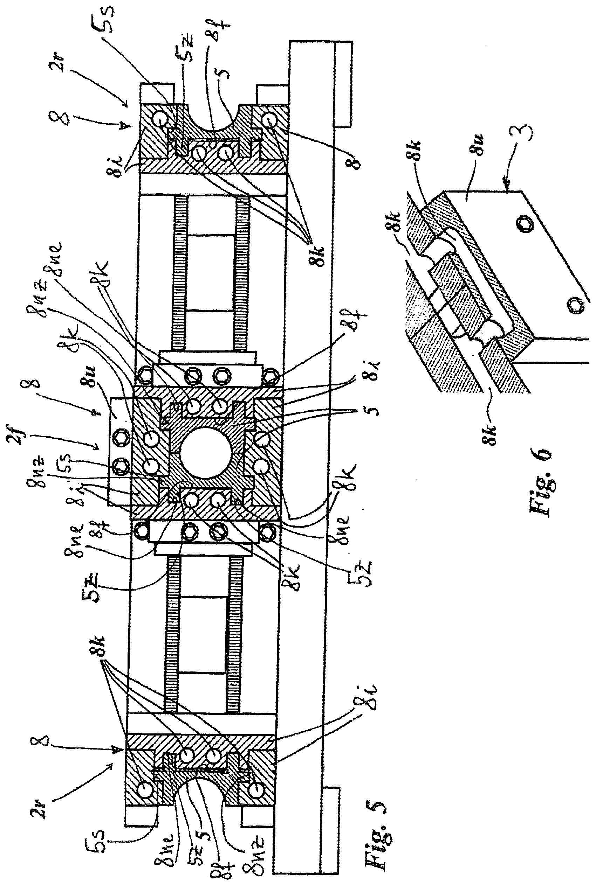

Die Formbacken 5 sind in einer ortsfesten Führungseinrichtung 6 geführt. Wie in den Figuren 5 und 6 in Verbindung mit Fig. 2 erkennbar, wird in dem dargestellten Ausführungsbeispiel die Führungseinrichtung 6 von Führungs- und/oder Temperierkörpereinrichtungen 8 gebildet, die stationär auf Querträgern 1q abgestützt sind. In den Führungs- und/oder Temperierkörpereinrichtungen 8 sind Temperiermittelkanäle 8k ausgebildet, die von einem Temperiermittel durchströmt sind. Die Führungs- und/oder Temperierkörpereinrichtungen 8 sind aus Führungs- und/oder Temperierkörpern 8i zusammengesetzt. Die Führungs- und/oder Temperierkörper 8i sind so angeordnet, dass sie die passierenden Formbacken 5 oberhalb, unterhalb und seitlich umgeben. Die Führungs- und/oder Temperierkörper 8i weisen Führungs- und/oder Temperierflächen 8f auf, an denen die passierenden Formbacken 5 gleitend geführt sind (siehe Fig. 5). Die Führungs- und/oder Temperierflächen 8f sind komplementär zur Außenseite der Formbacken ausgebildet. In den Führungs- und/oder Temperierflächen 8f sind Führungsnuten 6n, 8nz, 8ne ausgebildet, in die Führungsstifte 5s oder bei abgewandelten Ausführungen andere Vorsprünge der Formbacken 5 eingreifen. Die Führungs- und/oder Temperierkörper 8i bilden somit Temperierungskörper zur Temperierung der Formbacken 5 und gleichzeitig bilden sie Führungskörper, in oder an denen die Formbacken 5 geführt werden. Die Formflächen 5f der Formbacken 5 werden durch das Temperiermedium, das durch die Temperiermittelkanäle 8k der Führungs- und/oder Temperierkörper 8i strömt, indirekt temperiert, d.h. in der Regel gekühlt. Es sind jedoch auch Anwendungen möglich, bei denen die Temperatur des Temperiermittels so eingestellt wird, dass zumindest in bestimmten Abschnitten des Korrugators eine Erwärmung der Formbacken durch die Führungs- und/oder Temperierkörpereinrichtung 8 erfolgt.

Figur 5 zeigt einen Querschnitt durch den Zwischenabschnitt 1z. Erkennbar ist in der Mitte die Formstrecke 1f und an den beiden Seiten je eine Rückführung 1r. Die Führungs- und/oder Temperierkörper 8i sind aus länglichen Grundkörpern gebildet, in denen jeweils zwei Temperiermittelkanäle 8k angeordnet sind. Die Temperiermittelkanäle 8k verlaufen entlang der Längserstreckungsrichtung der Führungs- und/oder Temperierkörper 8i. Die Temperiermittelkanäle 8k werden von einem Temperiermittel durchströmt. Die Formbacken 5 passieren die Führungs- und/oder Temperierkörper 8i entlang der Längserstreckungsrichtung der Führungs- und/oder Temperierkörper 8i. Die Temperiermittelkanäle 8k erstrecken sich in die Führungsrichtung.

Die Führungs- und/oder Temperierkörper 8i wirken, wie bereits beschrieben, mit den passierenden Formbacken 5 zur Führung und Temperierung zusammen. Die Führungs- und/oder Temperierkörper 8i weisen hierfür die Führungs- und/oder Temperierflächen 8f auf, die mit Führungs- und/oder Temperierflächen der Formbacken 5 zusammenwirken. In dem dargestellten Ausführungsbeispiel sind die führungs- und temperierkörperseitigen Führungs- und/oder Temperierflächen 8f an der den zugeordneten Formbacken 5 zugewandten Seite der Führungs- und/oder Temperierkörper 8i ausgebildet. Die formbackenseitigen Führungs- und/oder Temperierflächen sind an der Außenseite der Formbacken 5 ausgebildet. An der davon abgewandten Seite der Formbacken 5 sind die Formflächen 5f ausgebildet, die über die gesamte Fläche eine möglichst gleichmäßige Temperaturverteilung erhalten sollen.

Wie Fig. 5 zeigt, sind die Führungs- und/oder Temperierkörper 8i im Formstreckenmodul 2f so ausgebildet, dass die Formbackenpaare von den Führungs- und/oder Temperierkörpern 8i umschlossen werden. Wie Fig. 5 entnehmbar, umschließen in der Formstrecke vier Führungs- und/oder Temperierkörper 8i die Formbackenpaare an allen vier Längsseiten, indem zwei seitliche Führungs- und/oder Temperierkörper 8i mit den Seitenflächen der Formbackenpaare in thermischem Kontakt sind und zwei Führungs- und/oder Temperierkörper 8i mit der Oberseite bzw. mit der Unterseite der Formbackenpaare in thermischem Kontakt sind. Die in den Rückführungsmodulen 2r angeordneten Führungs- und/oder Temperierkörper 8i sind wie die vorgenannten Führungs- und/oder Temperierkörper 8i ausgebildet, jedoch mit dem Unterschied, dass die Formbacken 5 in den Rückführungen 1r nur an drei Längsseiten durch die Führungs- und/oder Temperierkörper 8i umgeben sind, wobei die offenen Seiten der Formbacken 5 die Formflächen 5f aufweisen, die also nicht abgedeckt sind.

Zur primären Führung der Formbacken 5 sind, wie bereits beschrieben, Nuten 8nz, 8ne in den oberen und unteren Führungs- und/oder Temperierflächen 8f ausgebildet, in denen die oberen und unteren Führungsstifte 5s der Formbacken 5 eingreifen. In bevorzugten Ausführungen sind die Führungsstifte 5s mit einem Durchmesser kleiner als 14 mm ausgebildet. Die Nuten 8nz zur Führung der Führungsstifte 5s werden, wie in Figur 5 dargestellt, durch aneinander angrenzende Führungs- und/oder Temperierkörper 8i gebildet. Ferner sind auch seitlich Führungsnuten 8ne als einstückige Nuten in den Führungs- und/oder Temperierkörpern 8i ausgebildet. In diesen Nuten 8ne greifen bei dem dargestellten Ausführungsbeispiel die Zahnleisten 5z der Formbacken 5 ein. Auch dadurch wird eine Führung der Formbacken 5 erhalten.

Durch diese ineinandergreifenden Führungsstrukturen, d.h. die Zahnleisten 5z, die Führungsstifte 6n und/oder ähnliche weiter ineinandergreifende Vertiefungen und Erhöhungen, wird die Größe der Kontaktfläche zwischen den Führungs- und/oder Temperierkörpern 8i und den Formbacken 5 beeinflusst und damit die Wärmeübertragung zumindest mitbestimmt.

Bezug nehmend auf Fig. 4 sei noch auf weitere Führungsnuten verwiesen. Diese sind als untere und obere Führungsnuten 6n in dem Einlaufmodul 2e und in dem Auslaufmodul 2a ausgebildet. In diese Nuten 6n greifen die Führungsstifte 5s der Formbacken unter Ausbildung der Führung im Umlenkbereich des Einlaufabschnitts 1e und des Auslaufabschnitts 1a

Die Führungseinrichtung zur Führung der Formbacken ist somit eine zusammengesetzte Einrichtung, zusammengesetzt aus der Führung durch die Führungs- und/oder Temperierkörpereinrichtungen 8 (siehe Fig. 5) und aus der Führung in den Umlenkbereichen im Einlaufabschnitt 1e und im Auslaufabschnitt 1a.

Die Führungsnuten 6n, 8nz, 8ne der Führungseinrichtungen 6, 8, 8i sind als endlose, d.h. jeweils durchgehende Führungsnuten 6n ausgebildet, in denen die an den Formbacken 5 angeordneten Führungsstifte 5s im Sinne eines Endlos-Umlaufs gleiten. Die Formbacken 5 weisen im dargestellten Fall jeweils einen oberen und einen unteren Führungsstift 5s auf, die an entgegengesetzten Endabschnitten des Formbackens 5 jeweils auf der Oberseite bzw. der Unterseite des Formbackens 5 angeordnet sind. Dementsprechend sind zwei obere Führungsnuten 6n, 8nz, 8ne und zwei untere Führungsnuten 6n, 8nz, 8ne in den jeweiligen Führungs- und/oder Temperierkörpern 8i und in den Umlenkbereichen der Ein- und Auslaufabschnitte 1e, 1a ausgebildet. Die oberen und die unteren Führungsnuten weisen unterschiedliche Geometrien auf, wobei die durch die Führungsnuten definierten Führungsbahnen so ausgebildet sind, dass die Formbacken 5 in den Kurvenabschnitten der Führungsbahnen eine Schwenkbewegung ausführen (siehe Fig. 4), wie dies in den Umlenkbereichen der Ein- und Auslaufabschnitte erforderlich ist. Durch die Schwenkbewegung ist der Kurvenverschleiß minimiert. In dem in Fig. 3 dargestellten Ausführungsbeispiel sind die Führungsstifte 5s starr mit den Formbacken 5 verbunden, beispielsweise mittels einer Pressverbindung. Es kann aber auch vorgesehen sein, die Führungsstifte 5s drehbar zu lagern, beispielsweise in Gleitlagern, wodurch der besagte Kurvenverschleiß noch weiter reduziert ist.

Die Formbacken 5 weisen im dargestellten Fall jeweils zwei Zahnleisten 5z auf, die im Einlaufmodul 2e und im Auslaufmodul 2a mit Umlenkritzeln 11 zusammenwirken, wie in Fig. 4 gezeigt. In Fig. 4 sind die Verzahnungen nicht dargestellt.

Wie Fig. 2 sind in dem dargestellten Ausführungsbeispiel die im Zwischenabschnitt 1z angeordneten Module, nämlich das Formstreckenmodul 2f und die beiden Rückführungsmodule 2r jeweils aus zwei Teilmodulen ausgebildet. Zur Verbindung benachbarter Module sind plattenförmige Kupplungseinrichtungen 3 vorgesehen. Die Kupplungseinrichtungen 3 sind durch Schraubverbindungen lösbar mit den Modulen verbunden. Die Formstreckenmodule 2f sind an den Stirnflächen durch die plattenförmigen Kupplungseinrichtungen 3 miteinander gekuppelt. Ebenso sind die Rückführungsmodule 2r an den Stirnflächen durch Kupplungseinrichtungen 3 miteinander gekuppelt. Zur Kupplung des Einlaufmoduls 2e und des Auslaufmoduls 2a mit den Formstreckenmodulen 2f und den Rückführungsmodulen 2r sind ebenfalls Kupplungseinrichtungen 3 in den Verbindungsbereichen angeordnet.

Zur Verbindung der Temperierkanäle 8k benachbarter Module sind Temperierkanalüberleitungen 8u in den Kupplungsmodulen 3 vorgesehen. Es sei verwiesen auf Figur 6. Die Temperierkanalumleitungen 8u weisen U-förmige Umleitungskanäle 8k auf, deren Endabschnitte mit Sacklöchern korrespondieren, die die Seitenwandung der Führungs- und/oder Temperierkörper 8i der Module senkrecht durchgreifen und in die Temperiermittelkanäle 8k münden.

Die Führungseinrichtung 6 im Zwischenabschnitt 1z wird, wie bereits beschrieben, durch die Führungs- und/oder Temperierkörpereinrichtung 8 gebildet. Dies ist auf einem Grundgestell angeordnet, wie die Figuren 2 und 5 zeigen. Das Grundgestell besteht in dem in Figur 2 dargestellten Fall aus mehreren zueinander beabstandeten Grundgestellteilen, im dargestellten Fall Querträgern 1q. Das Einlaufmodul 2e ist auf einer eigenen Lagerplatte angeordnet, wobei die Lagerplatte auf zwei Querträgern 1q abgestützt ist. Das Auslaufmodul 2a ist auf zwei zueinander beabstandeten Querträgern 1q angeordnet. Das Einlaufmodul 2e und das Auslaufmodul 2a werden durch jeweils einen Querträger 1q mit einem Modul des Zwischenabschnittes 1z in den Verbindungsbereichen gekuppelt. Die Module des Zwischenabschnittes 1z werden untereinander in den Verbindungsbereichen durch einen Querträger 1q miteinander gekuppelt. Die Querträger 1q enthalten Kanalverbindungen mit U-förmigen Kanälen zur Verbindung der Temperierkanäle der Module. In einem abgewandelten Ausführungsbeispiel ist es auch möglich, dass die unteren Temperierkanäle 8k der Module durch Kupplungseinrichtungen 3 miteinander gekuppelt sind und die Kupplungseinrichtungen 3 auf den Querträgern 1q angeordnet sind.

### Bezugszeichenliste

- 1: Korrugator
- 1a: Auslaufabschnitt
- 1e: Einlaufabschnitt
- 1f: Formstrecke
- 1r: Rückführung
- 1q: Querträger
- 1z: Zwischenabschnitt
- 2a: Auslaufmodul
- 2e: Einlaufmodul
- 2f: Formstreckenmodul
- 2r: Rückführungsmodul
- 3: Kupplungseinrichtung
- 5: Formbacken
- 5f: Formfläche
- 5s: Führungsstifte
- 5z: Zahnleisten
- 6: ortsfeste Führungseinrichtung
- 6n, 8nz, 8ne: Führungsnut;
- 8: Führungs- und/oder Temperierkörpereinrichtung
- 8i: Führungs- und/oder Temperierkörper
- 8k: Temperierkanal
- 8u: Temperierkanalumleitung
- 8f: Temperierfläche
- 9: Extruder
- 9f: Formluftzuführung
- 10: Kunststoffrohr
- 9s: Spritzkopf
- 11: Umlenkritzel

## Patentansprüche

1. Vorrichtung (10) zum Herstellen von Kunststoffrohren (10),
mit einem Extruder (9) mit Spritzkopf (9s) und einem Korrugator (1), in den über den Spritzkopf (9s) ein Kunststoffschmelzeschlauch zum Ausformen des Kunststoffrohres (10) eingeleitet wird, wobei vorgesehen ist,
dass der Korrugator (1) eine Formstrecke (1f) aufweist, in der Formbacken (5) paarweise in Produktionsrichtung geführt werden,
dass in einem Einlaufabschnitt (1e) des Korrugators (1) die Formbacken (5) zu Formbackenpaaren zum Anfang der Formstrecke (1f) zusammengeführt werden, und
dass in einem Auslaufabschnitt (1a) des Korrugators (1) die Formbackenpaare vom Ende der Formstrecke (1f) auseinander geführt werden, und
dass in einem zwischen dem Einlaufabschnitt (1e) und dem Auslaufabschnitt (1a) angeordneten Zwischenabschnitt (1z) des Korrugators (1) die Formstrecke (1f) zur Führung der Formbackenpaare ausgebildet ist und mindestens eine Rückführung (1r) ausgebildet ist, in der die Formbacken (5) vom Ende der Formstrecke (1f) zum Anfang der Formstrecke (1f) rückgeführt werden,
mit einer ortsfesten Führungseinrichtung (6, 8, 8i) zur Führung der Formbacken (5),
**dadurch gekennzeichnet,**
a) **dass** jeder Formbacken (5) nur zwei Führungsstifte (5s,5s) aufweist, und zwar einen ersten Führungsstift (5s) und einen zweiten Führungsstift (5s), und die Formbacken (5) in der Führungseinrichtung (6, 8, 8i) geführt sind, indem der erste Führungsstift (5s) mit seinem freien Ende in einer ersten Führungsnut (6n, 8nz) der Führungseinrichtung (6, 8, 8i) eingreift und der zweite Führungsstift (5s) mit seinem freien Ende in eine zweite Führungsnut (6n, 8nz) der Führungseinrichtung (6, 8, 8i) eingreift,
- wobei der erste Führungsstift (5s) und der zweite Führungsstift (5s) jeweils so ausgebildet sind,
**dass** das in die Führungsnut (6n, 8nz, 8ne) eingreifende freie Ende des Führungsstifts (5s) als ein bewegungsfestes Teil des Führungsstiftes (5s) ausgebildet ist und
der Führungsstift (5s) in den Formbacken (5) eingepresst oder eingeschweißt oder verschraubt ist,
- wobei die zwei Führungsstifte (5s) an jedem Formbacken (5) zueinander mit einem Abstand angeordnet sind, der entlang der Erstreckung des Formbackens (5) in Produktionsrichtung ausgebildet ist,
- wobei die zwei Führungsstifte (5s) an unterschiedlichen Seiten des Formbackens (5) an gegenüberliegenden Seiten des Formbackens (5) angeordnet sind,
b) **dass** die Führungseinrichtung (6, 8, 8i) eine Führungs- und Temperierkörpereinrichtung (8, 8i) aufweist,
- wobei in einer Führungs- und Temperierflächeneinrichtung (8, 8i) der Führungs- und Temperierkörpereinrichtung (8, 8i) Erhebungen und/oder Vertiefungen (8nz, 8ne) aufweisende Führungsausnehmungen und/oder ebene Führungsflächen ausgebildet sind, die mit korrespondierenden Führungsausnehmungen (8nz, 8ne) und/oder Führungsflächen der passierenden Formbacken (5) zusammenwirken,
c) **dass** die Führungseinrichtung zur Führung der Formbacken eine zusammengesetzte Einrichtung ist, zusammengesetzt
- aus einer Führung durch die Führungs- und Temperierkörpereinrichtung in dem Zwischenabschnitt des Korrugators ausgebildet und
- aus einer Führung in den Umlenkbereichen im Einlaufabschnitt (1e) und im Auslaufabschnitt (1a),
- wobei zur Ausbildung der Führung im Umlenkbereich des Einlaufabschnitts (1e) und des Auslaufabschnitts (1a) untere und obere Führungsnuten (6e) vorgesehen sind, in die die Führungsstifte (5s) der Formbacken eingreifen,
- wobei die Formbacken (5) als den ersten Führungsstift (5s) und den zweiten Führungsstift (5s) jeweils einen oberen und einen unteren Führungsstift (5s) aufweisen, die an entgegengesetzten Endabschnitten des Formbackens (5) jeweils auf der Oberseite bzw. der Unterseite des Formbackens (5) angeordnet sind, und die oberen und die unteren Führungssnuten unterschiedliche Geometrien aufweisen, wobei die durch die Führungsnuten definierten Führungsbahnen so ausgebildet sind, dass die Formbacken in den Kurvenabschnitten der Führungsbahnen eine Schwenkbewegung ausführen, wie dies in den Umlenkbereichen der Ein- und Auslaufabschnitte erforderlich ist.

2. Vorrichtung nach Anspruch 1,
**dadurch gekennzeichnet,**
**dass** der erste Führungsstift (5s) und/oder der zweite Führungsstift (5s) jeweils als einstückiger Führungsstift oder als mehrteiliger, vorzugsweise aus mehreren stiftförmigen Teilen zusammengesetzter Führungsstift ausgebildet ist.

3. Vorrichtung nach einem der vorangehenden Ansprüche,
**dadurch gekennzeichnet,**
**dass** der erste Führungsstift (5s) und/oder der zweite Führungsstift (5s) jeweils so ausgebildet ist, dass das in die Führungsnut (6n, 8nz, 8ne) eingreifende Ende des Führungsstifts (5s) als einstückiges Teil des Führungsstiftes (5s) ausgebildet ist.

4. Vorrichtung nach einem der vorangehenden Ansprüche,
**dadurch gekennzeichnet,**
**dass** der erste Führungsstift (5s) und/oder der zweite Führungsstift (5s) jeweils so ausgebildet ist, dass der Führungsstift (5s) zumindest im Bereich seines freien Endes gehärtet ausgebildet ist.

5. Vorrichtung nach einem der vorangehenden Ansprüche,
**dadurch gekennzeichnet,**
**dass** der erste Führungsstift (5s) und/oder der zweite Führungsstift (5s) jeweils so ausgebildet ist, dass der Führungsstift zumindest im Bereich des freien Endes weicher ausgebildet ist als die Führungsbahn der Führungsnut (6n, 8nz, 8ne).

6. Vorrichtung nach einem der vorangehenden Ansprüche,
**dadurch gekennzeichnet,**
**dass** der erste Führungsstift (5s) und/oder der zweite Führungsstift (5s) jeweils so ausgebildet ist, dass der Führungsstift (5s) in dem Formbacken (5) über ein Drehlager drehbar gelagert ist.

7. Vorrichtung nach einem der vorangehenden Ansprüche,
**dadurch gekennzeichnet,**
**dass** die Erhebungen und/oder Vertiefungen aufweisenden Führungsausformungen (8nz, 8ne) der Führungs- und/oder Temperierkörpereinrichtungen (8) vorzugsweise als Führungsstifte und/oder Führungsnasen ausgebildet sind und/oder als Führungsvertiefungen (8nz, 8ne), vorzugsweise Führungsnuten ausgebildet sind; und
**dass** die Erhebungen (5s) und/oder Vertiefungen aufweisenden Führungsausformungen der Formbacken (5) als Führungsausformungen (8nz, 8ne) zum Zusammenwirken mit der Führungs- und/oder Temperierkörpereinrichtung (8, 8i) ausgebildet sind.

8. Vorrichtung nach einem der vorangehenden Ansprüche,
**dadurch gekennzeichnet,**
**dass** die Führungs- und/oder Temperierkörpereinrichtung (8) aus mehreren in Führungsrichtung axial hintereinander auf Stoß angeordneten Temperierkörpern (8i) ausgebildet ist und/oder aus mehreren quer zur Führungsrichtung nebeneinander angeordneten Temperierkörpern (8i) gebildet ist.

9. Vorrichtung nach einem der vorangehenden Ansprüche,
**dadurch gekennzeichnet,**
**dass** mindestens eines der Führungsvertiefungen (8nz) und/oder der Führungsvorsprünge im Bereich zwischen zwei in Querrichtung benachbarten Führungs- und/oder Temperierkörpern (8i) ausgebildet ist.

## Claims

1. Device (10) for producing plastic pipes (10),
having an extruder (9) having a spray head (9s) and a corrugator (1), into which a plastic melting hose for shaping the plastic pipes (10) is introduced via the spray head (9s), wherein it is provided that
the corrugator (1) has a moulding section (1f), in which mould blocks (5) are guided in pairs in the production direction,
in an inlet section (1e) of the corrugator (1), the mould blocks (5) are combined into mould block pairs for the start of the moulding section (1f), and
in an outlet section (1a) of the corrugator (1), the mould block pairs are guided away from each other from the end of the moulding section (1f), and
in an intermediate section (1z) of the corrugator (1) arranged between the inlet section (1e) and the outlet section (1a), the moulding section (1f) is designed for guiding the mould block pairs, and at least one return guide (1r) is designed in which the mould blocks (5) are returned from the end of the moulding section (1f) to the beginning of the moulding section (1f),
having a stationary guide device (6, 8, 8i) for guiding the mould blocks (5), **characterised in that**
a) each mould block (5) only has two guide pins (5s, 5s), namely a first guide pin (5s) and a second guide pin (5s), and the mould blocks (5) are guided in the guide device (6, 8, 8i) by the first guide pin (5s) engaging in a first guide groove (6n, 8nz) of the guide device (6, 8, 8i) with its free end, and the second guide pin (5s) engaging in a second guide groove (6n, 8nz) of the guide device (6, 8, 8i) with its free end,
- wherein the first guide pin (5s) and the second guide pin (5s) are each formed in such a way that
the free end of the guide pin (5s) engaging in the guide groove (6n, 8nz, 8ne) is formed as a non-moveable part of the guide pin (5s), and
the guide pin (5s) is pressed or welded or screwed into the mould block (5),
- wherein the two guide pins (5s) are arranged on each mould block (5) at a distance apart from each other which is formed along the extension of the mould block (5) in the production direction,
- wherein the two guide pins (5s) are arranged on different sides of the mould block (5) on opposite sides of the mould block (5),
b) the guide device (6, 8, 8i) has a guide and temperature control body device (8, 8i),
- wherein, in a guide and temperature control surface device (8, 8i) of the guide and temperature control body device (8, 8i), guide recesses, which have elevations and/or depressions (8nz, 8ne), and/or flat guide surfaces are formed, which cooperate with corresponding guide recesses (8nz, 8ne) and/or guide surfaces of the passing mould blocks (5),
c) the guide device for guiding the mould blocks is a composite device, composed of
- a guide formed through the guide and temperature control body device in the intermediate section of the corrugator and
- a guide in the deflection regions in the inlet section (1e) and in the outlet section (1a),
- wherein, to form the guide in the deflection region of the inlet section (1e) and the outlet section (1a), lower and upper guide grooves (6s) are provided, in which the guide pins (5s) of the mould blocks engage,
- wherein the mould blocks (5) each have an upper and a lower guide pin (5s) as the first guide pin (5s) and the second guide pin (5s), which are arranged on opposite end sections of the mould block (5) on the upper side or the underside of the mould block (5) respectively, and the upper and the lower guide grooves have different geometries, wherein the guideways defined by the guide grooves are formed in such a way that the mould blocks in the curved sections of the guideways perform a pivot movement, as is necessary in the deflection regions of the inlet and outlet sections.

2. Device according to claim 1,
**characterised in that**
the first guide pin (5s) and/or the second guide pin (5s) is designed in each case as a one-piece guide pin or as a multi-piece guide pin which is preferably composed of several pin-shaped parts.

3. Device according to one of the preceding claims,
**characterised in that**
the first guide pin (5s) and/or the second guide pin (5s) is respectively formed in such a way that the end of the guide pin (5s) engaging in the guide groove (6n, 8nz, 8ne) is formed as a one-piece part of the guide pin (5s).

4. Device according to one of the preceding claims,
**characterised in that**
the first guide pin (5s) and/or the second guide pin (5s) is respectively formed in such a way that the guide pin (5s) is formed as hardened at least in the region of its free end.

5. Device according to one of the preceding claims,
**characterised in that**
the first guide pin (5s) and/or the second guide pin (5s) is respectively formed in such a way that the guide pin is formed as softer than the guideway of the guide groove (6n, 8nz, 8ne) at least in the region of the free end.

6. Device according to one of the preceding claims,
**characterised in that**
the first guide pin (5s) and/or the second guide pin (5s) is respectively formed in such a way that the guide pin (5s) is rotatably mounted in the mould block (5) by means of a pivot bearing.

7. Device according to one of the preceding claims,
**characterised in that**
the guide formations (8nz, 8ne), which have elevations and/or depressions, of the guide and/or temperature control body devices (8) are preferably formed as guide pins and/or guide lugs and/or as guide depressions (8nz, 8ne), preferably guide grooves; and
the guide formations, which have elevations (5s) and/or depressions, of the mould blocks (5) are formed as guide formations (8nz, 8ne) for cooperating with the guide and/or temperature control body device (8, 8i).

8. Device according to one of the preceding claims,
**characterised in that**
the guide and/or temperature control body device (8) is formed of several temperature control bodies (8i) arranged axially behind one another edge to edge in the guide direction, and/or formed of several temperature control bodies (8i) arranged adjacently to one another transversely to the guide direction.

9. Device according to one of the preceding claims,
**characterised in that**
at least one of the guide depressions (8nz) and/or of the guide projections is formed in the region between two guide and/or temperature control bodies (8i) adjacent to each other in the transverse direction.

## Revendications

1. Dispositif (10) pour la fabrication de tuyaux en plastique (10),
avec une extrudeuse (9) avec une tête d'injection (9s) et une machine à onduler (1), dans laquelle est introduit, par l'intermédiaire de la tête d'injection (9s), une gaine fondue en matière plastique pour le formage du tuyau en plastique (10), dans lequel il est prévu
que la machine à onduler (1) comprenne un trajet de formage (1f) dans lequel sont guidées des mâchoires de formage (5) par paires dans la direction de la production,
que, dans une portion d'entrée (1e) de la machine à onduler (1), les mâchoires de formage (5) sont regroupées en paires de mâchoires de formage vers le début du trajet de formage (1f), et
que, dans une portion de sortie (1a) de la machine à onduler (1), les paires de mâchoires de formage sont écartées à partir de la fin du trajet de formage (1f), et
que, dans une portion intermédiaire (1z), disposée entre la portion d'entrée (1e) et la portion de sortie (1a), de la machine à onduler (1), le trajet de formage (1f) est conçu pour le guidage des paires de mâchoires de formage et au moins un retour (1r) est réalisé, dans lequel les mâchoires de formage (5) sont retournées vers la fin du trajet de formage (1f) vers le début du trajet de formage (1f),
avec un dispositif de guidage fixe (6, 8, 8i) pour le guidage des mâchoires de formage (5),
**caractérisé en ce que**
a) chaque mâchoire de formage (5) comprend uniquement deux tiges de guidage (5s, 5s), à savoir une première tige de guidage (5s) et une deuxième tige de guidage (5s), et les mâchoires de formage (5) sont guidées dans le dispositif de guidage (6, 8, 8i), grâce au fait que la première tige de guidage (5s) s'emboîte, avec son extrémité libre, dans une première rainure de guidage (6n, 8nz) du dispositif de guidage (6, 8, 8i) et la deuxième tige de guidage (5s) s'emboîte, avec son extrémité libre, dans une deuxième rainure de guidage (6n, 8nz) du dispositif de guidage (6, 8, 8i),
- dans lequel la première tige de guidage (5s) et la deuxième tige de guidage (5s) sont chacune conçues de façon à ce que l'extrémité libre de la tige de guidage (5s) s'emboîtant dans la rainure de guidage (6n, 8nz, 8ne) est conçue comme une partie fixe de la tige de guidage (5s) et
la tige de guidage (5s) est enfoncée ou soudée ou vissée dans les mâchoires de formage (5),
dans lequel les deux tiges de guidage (5s) sont disposées sur chaque mâchoire de formage (5) avec une distance entre elles qui est réalisée le long de la mâchoire de formage (5) dans la direction de production,
- dans lequel les deux tiges de guidage (5s) sont disposées sur des côtés différents de la mâchoire de formage (5) sur des côtés opposés de la mâchoire de formage (5),
b) le dispositif de guidage (6, 8, 8i) comprend un dispositif à corps de guidage et de régulation de température (8, 8i),
- dans lequel, dans un dispositif à surface de guidage et de régulation de température (8, 8i) du dispositif à corps de guidage et de régulation de température (8, 8i), sont réalisées des évidements de guidage et/ou des surfaces de guidage planes comprenant des bossages et/ou des creux (8nz, 8ne), qui interagissent avec des évidements de guidage (8nz, 8ne) et/ou des surface de guidage des mâchoires de formage (5) qui passent,
c) le dispositif de guidage pour le guidage des mâchoires de formage est un dispositif constitué
- d'un guidage à travers le dispositif à corps de guidage et de régulation de température dans la portion intermédiaire de la machine à onduler et
- d'un guidage dans les parties de renvoi dans la portion d'entrée (1e) et dans la portion de sortie (1a),
- dans lequel, pour la réalisation du guidage dans la partie de renvoi de la portion d'entrée (1e) et de la portion de sortie (1a), sont prévues des rainures de guidage inférieures et supérieures (6e), dans lesquelles s'emboîtent les tiges de guidage (5s) des mâchoires de formage,
- dans lequel les mâchoires de formage (5) comprennent chacune, en tant que première tige de guidage (5s) et deuxième tige de guidage (5s), une tige de guidage supérieure et inférieure (5s), qui sont disposées au niveau de portions d'extrémité opposées de la mâchoire de formage (5) respectivement sur le côté supérieur respectivement le côté inférieur de la mâchoire de formage (5) et les rainures de guidage supérieure et inférieure présentent des géométries différentes, dans lequel les pistes de guidage définies par les rainures de guidage sont réalisées de façon à ce que les mâchoires de formage effectuent, dans les portions courbes des pistes de guidage, un mouvement de pivotement nécessaire dans les parties de renvoi des portions d'entrée et de sortie.

2. Dispositif selon la revendication 1,
**caractérisé en ce que**
la première tige de guidage (5s) et/ou la deuxième tige de guidage (5s) sont réalisées chacune comme une tige de guidage d'une seule pièce ou comme une tige de guidage en plusieurs parties, de préférence constituée de plusieurs parties en forme de tiges.

3. Dispositif selon l'une des revendications précédentes,
**caractérisé en ce que**
la première tige de guidage (5s) et/ou la deuxième tige de guidage (5s) sont chacune conçues de façon à ce que l'extrémité de la tige de guidage (5s) s'emboîtant dans la rainure de guidage (6n, 8nz, 8ne) soit conçue comme une partie d'une seule pièce de la tige de guidage (5s).

4. Dispositif selon l'une des revendications précédentes,
**caractérisé en ce que**
la première tige de guidage (5s) et/ou la deuxième tige de guidage (5s) sont chacune conçues de façon à ce que la tige de guidage (5s) soit conçue de façon à ce qu'elle soit durcie au moins au niveau de son extrémité libre.

5. Dispositif selon l'une des revendications précédentes,
**caractérisé en ce que**
la première tige de guidage (5s) et/ou la deuxième tige de guidage (5s) sont chacune conçues de façon à ce que la tige de guidage (5s) soit conçue, au moins au niveau de l'extrémité libre, de manière plus molle que la piste de guidage de la rainure de guidage (6n, 8nz, 8ne).

6. Dispositif selon l'une des revendications précédentes,
**caractérisé en ce que**
la première tige de guidage (5s) et/ou la deuxième tige de guidage (5s) sont chacune conçues de façon à ce que la tige de guidage (5s) soit logée de manière rotative dans la mâchoire de formage (5) par l'intermédiaire d'un palier rotatif.

7. Dispositif selon l'une des revendications précédentes,
**caractérisé en ce que**
les formations de guidage (8nz, 8ne) des dispositifs à corps de guidage et/ou de régulation de température (8), comprenant des bossages et/ou des cavités, sont conçues de préférence sous la forme de tiges de guidage et/ou d'embouts de guidage et/ou sous la forme de cavités de guidage (8nz, 8ne), de préférence des rainures de guidage ; et
les formations de guidage des mâchoires de formage (5), comprenant des bossages (5s) et/ou des cavités, sont conçues comme des formations de guidage (8nz, 8ne) sont conçues pour une interaction , avec le dispositif à corps de guidage et/ou de régulation de température (8, 8i).

8. Dispositif selon l'une des revendications précédentes,
**caractérisé en ce que**
le dispositif à corps de guidage et/ou de régulation de température (8) est constitué de plusieurs corps de régulation de température (8i) disposés les uns derrière les autres axialement dans la direction de guidage en aboutement et/ou de plusieurs corps de régulation de température (8i) juxtaposés transversalement par rapport à la direction de guidage.

9. Dispositif selon l'une des revendications précédentes,
**caractérisé en ce que**
au moins une des cavités de guidage (8nz) et/ou des saillies de guidage est réalisée dans la zone entre deux corps de guidage et/ou de régulation de température (8i) adjacents dans la direction transversale.
